## Europäisches Patentamt

## European Patent Office

## Office européen des brevets

(19)

(11) Veröffentlichungsnummer: **0 056 074**
**A1**

(12) ## EUROPÄISCHE PATENTANMELDUNG

(21) Anmeldenummer: **81107969.8**

(22) Anmeldetag: **06.10.81**

(51) Int. Cl.³: **B 23 K 20/00**

(30) Priorität: **23.12.80 DE 3048619**

(43) Veröffentlichungstag der Anmeldung: **21.07.82**
**Patentblatt 82/29**

(84) Benannte Vertragsstaaten: **DE FR GB IT NL SE**

(71) Anmelder: **DYNAMIT NOBEL AKTIENGESELLSCHAFT,**
**Patentabteilung Postfach 1209, D-5210 Troisdorf, Bez.**
**Köln (DE)**

(72) Erfinder: **Richter, Ulf, Dr., Steinpfad 22,**
**D-5909 Burbach-Würgendorf (DE)**

(54) Verfahren zur Wärmebehandlung von Schichtverbundwerkstoffen.

(57) Verfahren zur Wärmebehandlung von Schichtverbundwerkstoffen, die einen Grundwerkstoff aus unlegiertem oder
legiertem Stahl und einen Auflagewerkstoff aus Molybdän
oder Tantal aufweisen. Zum Schutz bei der Wärmebehandlung wird vor dieser auf die Auflageschicht durch Plattieren,
insbesondere Sprengplattieren, eine Schutzschicht aus einem Material aufgebracht, das bei den Temperaturen der
Wärmebehandlung mit der Auflageschicht nicht reagiert
und für Sauerstoff und Stickstoff eine Diffusionssperre bildet. Dieses Material ist nach der Warmverformung durch
Ätzen, Schleifen od.dgl. entfernbar.

ACTORUM AG

0056074

- 1 -

Troisdorf, den 18.12.1980
OZ.: 80 097 (3078) Kg/Wi

DYNAMIT NOBEL AKTIENGESELLSCHAFT
Troisdorf, Bez. Köln

Verfahren zur Wärmebehandlung von Schichtverbundwerkstoffen

Die Erfindung betrifft ein Verfahren zur Wärmebehandlung von Schichtverbundwerkstoffen gemäß dem Oberbegriff des Anspruchs 1.

Es ist bekannt, für eine Reihe von Anwendungsfällen, beispielsweise für chemische Reaktoren, Schichtverbundwerkstoffe aus Grundschicht und Auflageschicht zu verwenden, wobei in der Regel die verhältnismäßig dicke und im wesentlichen für die Festigkeit der Konstruktion verantwortliche Grundschicht aus einem verhältnismäßig billigen unlegiertem oder legiertem Stahl besteht und die dazu vergleichsweise dünne, gegen den Angriff der in den Reaktoren vorhandenen oder in diesen entstehenden chemischen Verbindungen resistente Auflageschicht aus hochwertigem und teuerem Material, wie beispielsweise aus einer Nickel-, Chrom-, Molybdän-Legierung oder auch völlig aus Titan, Nickel,

Molybdän, Tantal oder dgl., besteht.

Bei der Verwendung von Molybdän und Tantal als Auflageschicht hat es sich gezeigt, daß sich diese direkt oder
auch mit Hilfe einer Zwischenschicht aus Kupfer verhältnismäßig leicht auf eine Grundschicht aus Kohlenstoffstahl oder aus rostfreiem Stahl sprengplattieren
läßt. Die so sprengplattierten Bleche lassen sich danach
bis zu einem gewissen Grad kaltverformen und verschweißen,
so daß sie sich für den Bau korrosionsbeständiger
Apparate gut eignen.

Schwierigkeiten bereitet jedoch das Warmverformen zu
Böden oder auch anderen von der ebenen Erstreckung abweichenden Gebilden, da Molybdän oberhalb etwa 400°C
und Tantal bereits oberhalb etwa 300°C mit Sauerstoff
und auch mit Stickstoff reagieren und dadurch an ihrer
Oberfläche verspröden. Eine Warmverformung von Schichtverbundwerkstoffen mit einer Molybdän- oder Tantal-Auflageschicht, ja sogar darüber hinaus eine Wärmebehandlung
schlechthin, ist daher in bekannter Weise nur in Schutztaschen aus rostfreiem Stahl, gewöhnlichem Stahl
usw. möglich,      die nach dem Einbringen des Schichtverbundwerkstoffes völlig gasdicht zugeschweißt oder
aber während des Prozesses der Wärmebehandlung und ggf.
Warmverformung ständig mit Schutzgas, beispielsweise
reinstem Argon, gespült werden müssen.

Dies bedeutet nicht nur einen verhältnismäßigmäßig großen
zusätzlichen Aufwand, ganz abgesehen von den dabei zu
überwindenden technischen Schwierigkeiten, sondern birgt
auch die Gefahr in sich, daß      im Falle der Anwendung
einer gasdicht zugeschweißten Schutztasche, bei einem
etwaigen Aufreißen einer Schweißnaht der Schutztasche
ein totaler Ausfall des Werkstückes die Folge sein kann, wenn durch den ungewollten Luftzutritt zur glühenden Molybdän- oder Tantaloberfläche eine momentane Oxidation erfolgt.

Die Erfindung hat sich zur Aufgabe gemacht, eine Methode zu schaffen, die diese Nachteile bei der Wärmebehandlung mit ggf. nachfolgender Warmverformung vermeidet. Erfindungsgemäß wird dies mittels eines Verfahrens gemäß dem Kennzeichen des Anspruchs 1 erreicht, d.h. dadurch, daß eine weitere Plattierschrift aus einem Metall aufgebracht wird, das bei der vorgesehenen Glühtemperatur mit Molybdän und Tantal nicht reagiert, eine Diffusionssperre für Sauerstoff und Stickstoff bildet und sich nach dem Warmformungsprozess durch Auflösen in Säure, durch Schleifen oder eine sonstige geeignete Maßnahme mehr oder weniger leicht wieder entfernen läßt.

Für die Schutzschicht kommen verschiedene Materialien in Betracht. Besonders vorteilhaft hierfür ist nach einem weiteren Vorschlag der Erfindung Kupfer, da dies den Vorteil hat, daß es sich einerseits auf Molybdän und Tantal besonders gut plattieren läßt, andererseits aber durch die andere Farbe nach dem Ablösen oder Abschleifen leicht zu erkennen ist, ob die Oberflächenreinigung vollständig verlaufen ist.

Das Aufbringen der Schutzschicht durch Plattieren, beispielsweise Sprengplattieren, kann für sich allein erfolgen. In zweckmäßiger weiterer Ausbildung der Erfindung kann dies vorteilhaft aber auch gemeinsam mit der Molybdän- oder Tantalschicht erfolgen. Es ist auch möglich, z.B. Tantal-Kupfer-Bleche, Kupfer-Tantal-Kupfer-Bleche, Molybdän-Kupfer-Bleche oder Kupfer-Molybdän-Kupfer-Bleche separat zu plattieren, anschließend zu größeren Flächen auszuwalzen und danach auf die Stahl-Unterlage zu plattieren, vorzugsweise sprengzuplattieren.

00560'74

Die erfindungsgemäße Oberflächen-Schutzschicht verhindert nicht nur den Luftzutritt beim Glühen und Warmverformen, sondern hat darüber hinaus auch noch den Vorteil, daß sie die Oberfläche der teuren  Sonderwerkstoffe Molybdän und Tantal vor mechanischen Beschädigungen beim Richten und Verformen und ggf. auch bei einem evtl. notwendigen Transport schützt.

- 1 -

0056074

<u>Patentansprüche:</u>

1. Verfahren zur Wärmebehandlung von Schichtverbundwerkstoffen mit einem Grundwerkstoff aus unlegiertem oder
legiertem Stahl und einem Auflagewerkstoff aus Molybdän oder Tantal, d a d u r c h   g e k e n n -
z e i c h n e t , daß vor der Wärmebehandlung auf die
Auflageschicht durch Plattieren, insbesondere Sprengplattieren, eine Schutzschicht aus einem bei den
Wärmebehandlungstemperaturen mit der Auflageschicht
nicht reagierenden, für Sauerstoff und Stickstoff
eine Diffusionssperre bildenden und nach der Warmverformung durch Ätzen, Schleifen oder dgl. entfernbaren Material aufgebracht wird.

2. Verfahren nach Anspruch 1, d a d u r c h   g e k e n n -
z e i c h n e t , daß das Material für die Schutzschicht Eisen, Nickel, insbesondere Kupfer verwendet
wird.

3. Verfahren nach Anspruch 2, bei dem als Material für
die Schutzschicht Kupfer verwendet wird, d a d u r c h
g e k e n n z e i c h n e t , daß gleichzeitig mit
dem Aufbringen der Auflageschicht auf die Grundschicht die Schutzschicht auf die Auflageschicht
aufgebracht wird.

4. Verfahren nach Anspruch 1 oder 2, mit Tantal als
Auflagewerkstoff und Kupfer als Schutzschichtwerkstoff, d a d u r c h   g e k e n n z e i c h n e t ,
daß der Auflagewerkstoff ein- oder beidseitig mit dem
Schutzschichtwerkstoff plattiert wird, danach der
Verbund zu größeren Flächen ausgewalzt und schließlich
auf den Grundwerkstoff sprengplattiert wird.

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| | AT - B - 357 008 (VOEST-ALPINE) <br> * Gesamt * <br> -- | 1-4 | B 23 K 20/00 |
| | AT - B - 233 913 (E.I. DU PONT DE NEMOURS) <br> * Beispiel 20; Ansprüche * <br> -- | 1,2 | |
| | BE - A - 635 798 (E.I. DU PONT DE NEMOURS) <br> * Ansprüche, insbesondere Anspruch 33 * <br> -- | 1,2 | **RECHERCHIERTE SACHGEBIETE (Int. Cl.³)** |
| | US - A - 3 397 444 (O.R. BERG-MANN) <br> * Ansprüche * <br> -- | 1,2 | B 23 K 20/00 <br> C 23 C 5/00 <br> B 32 B 15/00 <br> C 22 F 1/00 |
| | US - A - 2 908 969 (WAGNER) <br> * Ansprüche * <br> ---- | 1 | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie. Übereinstimmendes Dokument

X Der vorliegende Recherchenbericht wurde für alle Patentansprüche erstellt.

| Recherchenort | Abschlußdatum der Recherche | Prüfer |
|---|---|---|
| WIEN | 15-02-1982 | BENCZE |

EPA form 1503.1 06.78